# EUROPEAN PATENT SPECIFICATION

(11) **EP 1 865 424 B1**
(45) Date of publication and mention of the grant of the patent: **19.08.2009**
(21) Application number: 06115256.7
(22) Date of filing: 09.06.2006
(51) Int. Cl.: G06F 17/30, H04L 29/08

(54) **Dynamic aggregation of web services**
Dynamische Sammlung von Web Services
Agrégation dynamique des services web

(43) Date of publication of application: 12.12.2007
(73) Proprietor: Research In Motion Limited, Waterloo, Ontario N2L 3W8 (CA)
(72) Inventor: Rogers, Adam, Waterloo Ontario N2L 5Z5 (CA); Shenfield, Michael, Richmond Hill, Ontario L4C 3S9 (CA)
(74) Representative: Rickard, David John

(56) References cited:
- EP-A- 1 569 418
- WO-A-20/04072885
- US-A1- 2004 068 586
- US-A1- 2004 215 700
- US-A1- 2005 038 867

## Description

The present invention relates generally to telecommunication networks and, in particular, to methods and systems for efficiently accessing Web services.

The term "Web service" typically refers to a modular application that can be invoked through the Internet. The consumers of Web services are typically other software applications that communicate, usually over HTTP (Hyper Text Transfer Protocol), using XML (eXtensible Markup Language) standards including SOAP (Simple Object Access Protocol), WSDL (Web Services Description Language), and UDDI (Universal Description, Discovery, and Integration). In other words, a "Web service" is an application hosted on a Web server that provides information and services to other network applications using the HTTP and XML protocols. Conceptually, a Web service can be understood as an URL-addressable library of functionality that is entirely independent of the consumer and stateless in its operation.

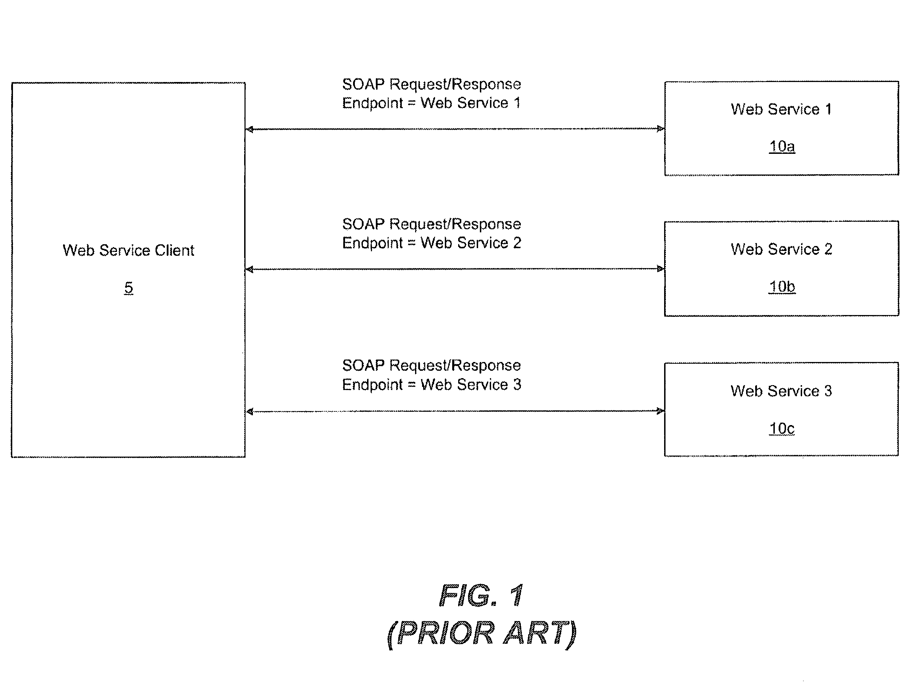

A conventional technique for accessing Web services is shown in FIG. 1. The client sends individual SOAP requests to each Web service and then receives individual SOAP responses from each Web service. In the example shown in FIG. 1, the client establishes three separate and direct communication sessions with each of the three Web services, which burdens the communication link between the client and the data network hosting the Web services. Furthermore, if dynamic endpoints have to be reset, for example for load balancing, the dynamic endpoints need to be reset at the client, which also burdens the communications link between the client and the data network. For wireless clients accessing Web services, this is particularly problematic since the wireless link typically has limited bandwidth.

EP1569418 discloses an apparatus and method for aggregating web services whereby the input to one web service may be obtained by invoking another web service. In other words, a user interface is generated to invoke a web services that obtains output data from another web service. [0004a] US2005/038867 discloses a method for integrating web services on a client computer. Selection criteria are used at a client computer to select web services. Once selected, service data is received from each of the web services. The service data is then aggregated at the client computer. The service data can be assembled into a custom page that can be displayed by a user.

Accordingly, it would be highly desirable to provide a system and method that enables a client to efficiently access Web services.

Preferably the present invention enables a client to efficiently access Web services.

Thus, an aspect of the present invention preferably provides a system for aggregating dynamic endpoints for efficiently delivering Web services to a client, the system comprising: a data network communicatively connected to the client for enabling the client to send and receive data through the data network; a plurality of Web services connected to the data network for enabling the client to access the Web services through the data network; and an aggregator communicatively connected between the client and the Web services), the aggregator being arranged to receive Web service requests from the client for requested Web services, access the requested Web services, receive Web services data from the Web services, aggregate the Web services data by reformulating the Web services data for the client, and then communicate the aggregated Web services to the client, wherein the client is arranged to establish a communications session with the aggregator by setting the aggregator as a fixed endpoint for the client and wherein the aggregator is arranged to dynamically reset endpoints of requested Web services without relaying the dynamically reset endpoints to the client.

In one embodiment, the client preferably runs on a wireless communications device hosted by a wireless network connected to the data network via an application gateway that mediates data traffic between the wireless network and the data network whereby the aggregator aggregates dynamic endpoints of all Web services requested by the client and efficiently communicates Web services data to the client over a wireless connection.

In another embodiment, the communications session can include sending a SOAP request to the aggregator containing a SOAP header including a redirect URL of a Web service for instructing the aggregator to access the requested Web service at that URL.

In another embodiment, the aggregator is preferably co-resident with the application gateway.

In yet another embodiment, the aggregator is preferably itself a Web service.

A further aspect of the present invention preferably provides a method of aggregating dynamic endpoints for efficiently delivering Web services to a client, the method comprising steps of: receiving a plurality of Web service requests from the client at an aggregator connected between the client and a data network to which the requested Web services are also connected, each Web service request comprising a respective Web service endpoint for accessing the requested Web service; establishing a communications session between the aggregator and each Web service endpoint to access each requested Web service; aggregating the requested Web services at the aggregator by reformulating the Web service data to create an aggregation of Web services for the client by dynamically resetting endpoints of Web services at the aggregator without relaying the dynamically reset endpoints to the client; and delivering the aggregation of Web services to the client. Thus, endpoints for Web services are dynamically reset by the aggregator without burdening the communications link between the client and the aggregator. This is particularly useful for wireless clients where dynamically resetting endpoints on the client side, as is done in the prior art, can strain the available wireless bandwidth.

In one embodiment, aggregating the plurality of Web services is preferably performed within an application gateway that is connected between a wireless network and the data network for mediating data traffic between the wireless network and the data network.

The step of receiving a plurality of Web service requests from the client may include the step of receiving SOAP requests from the client, each SOAP request having a SOAP header containing a redirect endpoint for a requested Web service enabling the aggregator to access the requested Web service.

The step of establishing a communications session between the aggregator and each Web service endpoint may include the step of sending a SOAP request and receiving a SOAP response to and from each of the requested Web service endpoints.

In another embodiment, the step of aggregating Web service data from each of the plurality of Web services at the aggregator to create an aggregation of Web services includes the step of reconstituting the aggregation of Web services as a single Web service accessible directly by the client.

### BRIEF DESCRIPTION OF THE DRAWINGS

Further features and advantages of the present invention will become apparent from the following detailed description, taken in combination with the appended drawings, in which:

FIG. 1 is a schematic illustration of a Web service client accessing a plurality of Web services in accordance with the prior art;

FIG. 2 is a schematic illustration of a server-side aggregator system for aggregating dynamic endpoints in accordance with an embodiment of the present invention;

FIG. 3 is a schematic layout of a network incorporating an aggregator for aggregating dynamic endpoints to efficiently deliver web services to a client in accordance with a preferred embodiment of the present invention;

FIG. 4 is a flowchart showing steps in a method of aggregating dynamic endpoints in accordance with an other aspect of the present invention.

It will be noted that throughout the appended drawings, like features are identified by like reference numerals.

### DESCRIPTION OF PREFERRED EMBODIMENTS

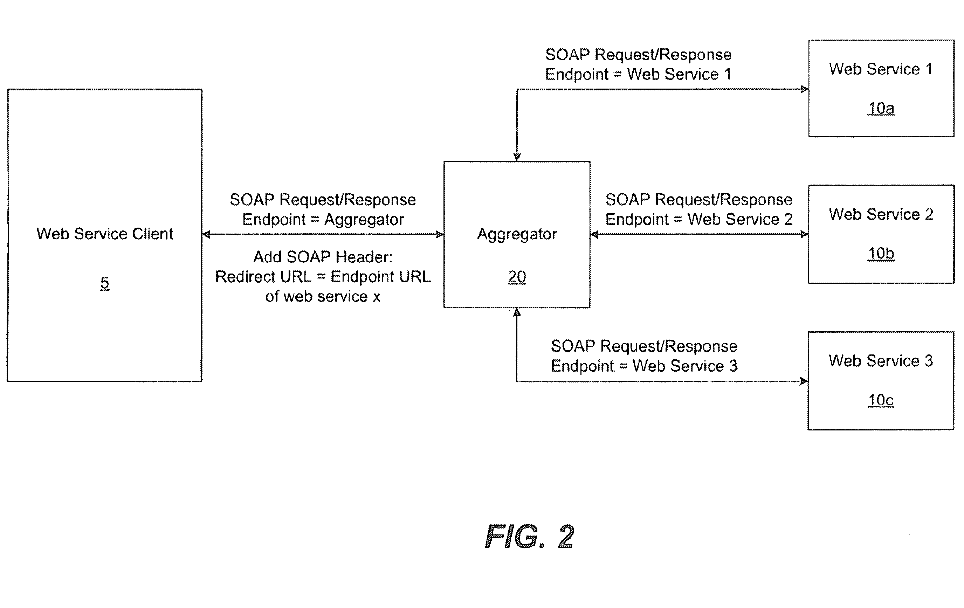

A method and system are capable of aggregating dynamic endpoints for efficiently delivering Web services to a client such as, but not limited to, a wireless client. As is known in the art, an endpoint is the address of a specific server instance on a host system. An endpoint can be static or dynamic. A static endpoint is a pre-assigned, stable address that a server uses every time it runs. In contrast, a dynamic endpoint is assigned at runtime for each protocol sequence the server is using. Representative embodiments of this new technology are described below, by way of example only, with reference to FIGs. 2-4.

FIG. 2 is a schematic illustration of a server-side aggregator system for aggregating dynamic endpoints in accordance with an embodiment of the present invention. As shown in FIG. 2, a Web service client 5 (hereinafter simply the "client") accesses Web services 1, 2 and 3 via an aggregator 20 (or "dynamic endpoint aggregator"). As will be elaborated below, the aggregator mediates between the client 5 and the Web services 10a, 10b and 10c by receiving the client's requests for Web services and then accessing the requested Web services, aggregating the Web services, and then communicating the aggregated Web services in an efficient manner to the client. In the preferred embodiment, the client 5 runs on a wireless platform, and therefore has a wireless communication link with the aggregator 20 via a wireless network. The aggregator 20 therefore aggregates the data from each of the Web services so as to minimize the burden on the wireless communication link.

As shown in FIG. 2, in the preferred embodiment, the client 5 sends SOAP requests to the aggregator 20 and receives SOAP responses from the aggregator 20 in reply. A communication session is thus established between the client 5 and the aggregator 20. In this communication session, the client 5 has set the aggregator's address as a fixed endpoint. As shown in FIG. 2, the client 5 adds a SOAP header to the SOAP request that contains a redirect URL corresponding to a requested Web service. The aggregator 20 reads the SOAP header, i.e. extracts the endpoint URL (or redirect URL) for the requested Web service, and then accesses the requested Web service. As shown in FIG. 2, the aggregator 20 establishes individual communication sessions with each of the requested Web services, exchanging SOAP requests and SOAP responses with each Web service. For each communication session or "web connection", the aggregator 20 sets an endpoint to be the address of the requested Web service.

As is known in the art, SOAP, or Simple Object Access Protocol, is a lightweight XML-based protocol for invoking Web services and exchanging structured data and type information in a decentralized, distributed environment, e.g. on the World Wide Web (WWW). SOAP is a protocol that uses an envelope for defining a framework to describe what is in a message and how to process it, a set of encoding rules for expressing instances of application- defined data types, and a convention for representing remote procedure calls and responses.

Three Web services 10a, 10b, 10c are illustrated in FIG. 2, but it should be understood that a greater or lesser number of Web services could be involved. As is understood by those of ordinary skill in the art, a Web service is an Internet-hosted application, i.e. a collection of protocols and standards used for exchanging data between applications. Software applications written in various programming languages and running on various platforms can use Web services to exchange data over computer networks like the Internet by using open standards. The applications are able to communicate, usually over HTTP (Hyper Text Transfer Protocol), using XML (extensible Markup Language) standards including SOAP (Simple Object Access Protocol), WSDL (Web Services Description Language), and UDDI (Universal Description, Discovery, and Integration).

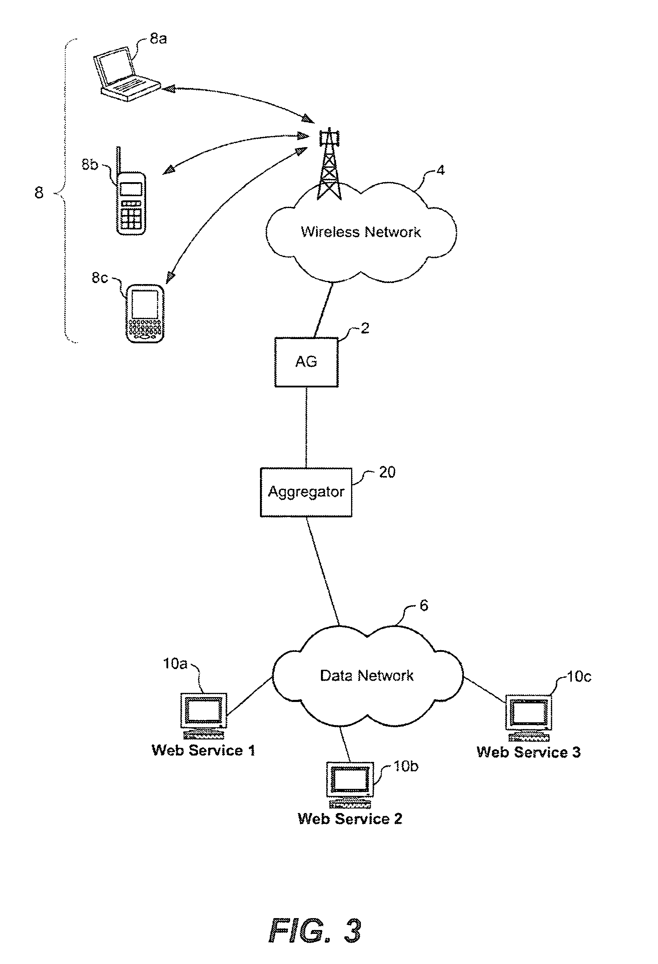

Referring now to FIG. 3, a system in accordance with a preferred embodiment of the present invention generally includes a wireless network 4 hosting a plurality of wireless communication devices 8 (also known as "terminal devices"). As illustrated, the wireless communication devices 8 can be any of a wide variety of wireless devices including but not limited to wireless-enabled laptop computers 8a, mobile or cellular telephones 8b, wireless-enabled PDAs 8c, self-service kiosks (not shown) and two-way pagers (not shown).

As shown in FIG. 3, an Application Gateway (AG) 2 is coupled between the wireless network 4 and a data network 6, such as for example, the Internet. The AG 2 generally operates to mediate data traffic flowing between wireless communication devices 8 connected to the wireless network 4 and Web services 10a, 10b, 10c accessible through the data network 6 in the manner described in Applicant's co-pending United States Patent Publications Nos. 2004/0215700 and 2004/0220998.

Each of these wireless communication devices 8, or terminal devices, generally includes a microprocessor connected to an RF section for wireless communications, a memory (at least a portion of which will normally be nonvolatile), and a user interface (UI) including a display and one or more user input devices (UID), e.g. a keyboard, thumb-wheel, stylus, microphone, etc. The microprocessor operates under software control to provide the functionality of the terminal device. Preferably, the software is designed on a layered model, in which a runtime environment (RE) translates between application software, such as an e-mail application, and the native machine-language of the terminal device to control the terminal device hardware, and communicate with Web services or other data services. This layered software model, and the manner in which it operates, is known from Applicant's co-pending United States Patent Publications Nos. 2004/0215700 and 2004/0220998.

As described in Applicant's co-pending United States Patent Publications Nos. 2004/0215700 and 2004/0220998, operation of the AG 2 enables, for example, a web-browser application executing in a terminal device to communicate with Web services or other Internet data services offered through the data network 6. The wireless client may, for example, access and download data or files from Web services connected to the data network 6. The AG 2 mediates between the terminal device and the Web service by receiving the data from the Web service, stripping out extraneous data that would otherwise encumber the wireless link, and formatting (or "repackaging") the data for wireless-optimized transmission to, and presentation on, the terminal device 8.

In addition to the AG 2, the system includes an aggregator 20, as shown in FIG. 3. The aggregator 20 can be co-resident with the AG 2 or it can be disposed as a separate server, as shown. As will be explained below, the aggregator 20 and the application gateway (AG) 2 collaborate synergistically to handle data traffic from Web services to the client running on a wireless platform such as one of the wireless communication devices 8 illustrated in FIG. 3.

As shown in FIG. 3, the aggregator 20 is communicatively connected between the client (running on one of the wireless platforms 8) and the Web services 10a, 10b, 10c to mediate between the client and the Web services. The aggregator 20 is thus capable of receiving Web service requests from the client for requested Web services, accessing the requested Web services, receiving Web services data from the Web services, aggregating the Web services data and then efficiently communicating the Web services data to the client.

The aggregator 20 enables a client to efficiently access Web services in two respects. First, the aggregator allows a client to access and aggregate several unrelated Web services. In other words, a Web service client can be built using Web service data from several different endpoints using the technique shown in FIG. 2. Instead of aggregating the endpoints on the client side, e.g. on the wireless platform, the aggregator 20 does all the work, whereby the client only communicates with the aggregator 20 (acting as an aggregated, or "centralized", Web service) instead of with several different Web services. Specifically, the aggregator 20 can receive SOAP requests, each request including a SOAP header containing a redirect URL for one of a plurality of requested Web services. For each requested Web service, the aggregator 20 can establish a communication session with the requested Web service, access the data from the requested Web service, and then aggregate this Web service data with the Web service data from other requested Web services. In the preferred embodiment, the aggregator 20 is itself a Web service that is constituted by the aggregation of other Web services.

Second, the aggregator 20 is capable of dynamically resetting endpoints for Web services without burdening the communication link to the client. As is known in the art, many Web services use dynamic endpoints, for example for load balancing or for other purposes. A "server-side" application (i.e. the Web service aggregator in accordance with embodiments of the present invention) can dynamically reset endpoints on behalf of the client, thus obviating the need for the client application to dynamically reset the endpoints. This economizes bandwidth on the communication link between the client and the data network. This is particularly useful to clients running on wireless platforms, because the dynamic endpoints would otherwise have to be reset at the client, which uses up the limited bandwidth of the wireless link. Therefore, the aggregator 20 alleviates the burden on the wireless link, thereby enabling the wireless client to efficiently access Web services.

Although the aggregator 20 is particularly useful for clients running on wireless platforms where transport optimization is needed to avoid unduly taxing the limited bandwidth of the wireless link, this aggregator can also be used for any wired client seeking to efficiently access Web services (e.g. a non-wireless networked computer, workstation or other computing device wired directly to the data network).

A further benefit is that none of the memory and processing resources of the wireless communication device are devoted to the tracking of these dynamic endpoints since all dynamic endpoints for all requested Web services are reset exclusively by the aggregator 20.

To recapitulate, therefore, the aggregator 20 enables a client to efficiently access Web services in two respects. First, the aggregator 20 can aggregate several different Web services in response to a client sending SOAP requests containing SOAP headers that carry redirect URLs for the requested Web services. Since the client only establishes communication with the aggregator, this minimally burdens the communication link between the client and the data network. Secondly, when a Web service requires resetting a dynamic endpoint (e.g. for load balancing), the aggregator resets the dynamic endpoint without burdening the communication link with the client. The aggregator 20 is especially beneficial for wireless clients because the available wireless bandwidth is typically strained when accessing Web services wirelessly.

Moreover, for wireless clients, the AG 2 collaborates with the aggregator 20 by receiving the aggregated Web service data, stripping out extraneous data (if any) and unusable functionalities (where applicable), and then repackaging and "tailoring" this data for the client application running on the wireless communication device. Thus, while the aggregator efficiently accesses and aggregates the requested Web services and handles resetting of dynamic endpoints, the AG tailors the aggregated Web services data for the client running on wireless communication device. Together, the aggregator and AG enable a wireless communication device to access Web services in a highly efficient manner.

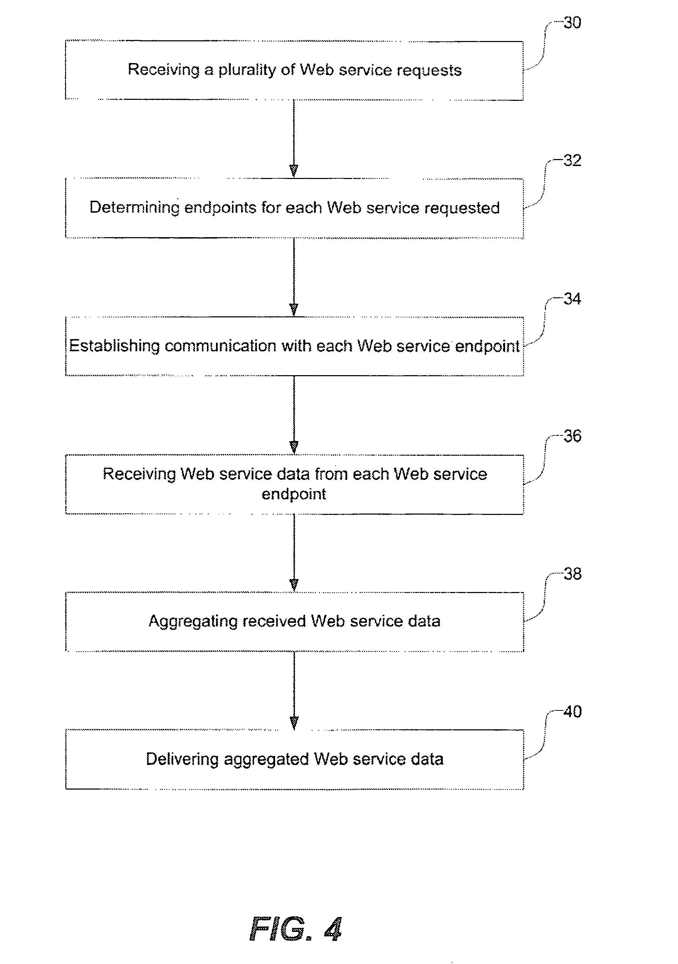

Another aspect of the present invention provides a method of aggregating dynamic endpoints for efficiently delivering Web services to a client. With reference to the flowchart shown in FIG. 4, the method includes a step of receiving a plurality of Web service requests from the client at an aggregator connected to a data network to which the requested Web services are also connected (at step 30). Each Web service request includes a respective Web service endpoint for accessing the requested Web service. In other words, the aggregator then determines endpoints for each requested Web service (at step 32).

As shown in FIG. 4, the method further includes steps of establishing a communications session between the aggregator and each Web service endpoint (at step 34). The aggregator then receives Web service data from each requested Web service (at step 36). Web service data from each of the plurality of Web services is then aggregated at the aggregator to create an aggregation of Web services suited to the client (at step 38). In other words, the resulting aggregation is optimized for (or at least well suited to) the display and processing capabilities of the client device. Reformulating the Web services data can include stripping out extraneous data (e.g. to eliminate certain functionalities that are not supported by the client device) or tailoring the Web services data for the client device. Reformulation of requested Web services thus renders the aggregated Web services more efficient for transmission. Accordingly, the aggregated Web services can be "efficiently" delivered to the client (at step 40).

For example, the step of receiving a plurality of Web service requests can include receiving SOAP requests from the client, each SOAP request having a SOAP header containing a redirect endpoint for a requested Web service enabling the aggregator to access the requested Web service.

In one embodiment, the step of aggregating Web service data from each of the plurality of Web services at the aggregator includes the step of reconstituting the aggregation of Web services as a single Web service accessible directly by the client.

The embodiments of the invention described above are intended to be exemplary only. The scope of the invention is therefore intended to be limited solely by the scope of the appended claims.

## Claims

1. A system for aggregating dynamic endpoints for efficiently delivering Web services to a client (5), the system comprising:
a data network (6) communicatively connected to the client (5) for enabling the client (5) to send and receive data through the data network (6);
a plurality of Web services (10) connected to the data network (6) for enabling the client (5) to access the Web services (10) through the data network (6); and
an aggregator (20) communicatively connected between the client (5) and the Web services (10), the aggregator being arranged to receive Web service requests from the client (5) for requested Web services (10), each Web service request comprising a respective Web service endpoint for accessing the requested Web service (10), access the requested Web services (10) at each Web service endpoint, receive Web services data from the Web services (10), aggregate the Web services data by reformulating the Web services data for the client (5), and then communicate the aggregated Web services (10) to the client, wherein the client (5) is arranged to establish a communications session with the aggregator (20) by setting the aggregator (20) as a fixed endpoint for the client (5) and wherein the aggregator (20) is arranged to dynamically reset endpoints of requested Web services (10) without relaying the dynamically reset endpoints to the client (5).

2. The system as claimed in claim 1 wherein the client (5) is arranged to run on a wireless communications device (8) hosted by a wireless network (4) connected to the data network (6) via an application gateway (2) that is arranged to mediate data traffic between the wireless network (4) and the data network (6) whereby the aggregator (20) is arranged to aggregate dynamic endpoints of all Web services (10) requested by the client (5) and efficiently communicate Web services data to the client (5) over a wireless connection.

3. The system as claimed in claim 2 wherein the communications session comprises a Simple Object Access Protocol "SOAP" request to the aggregator (20) containing a SOAP header comprising a redirect URL of a Web service (10) for instructing the aggregator (20) to access the requested Web service (10) at that URL.

4. The system as claimed in any one of the preceding claims wherein the aggregator (20) is co-resident with the application gateway (2).

5. The system as claimed in any one of the preceding claims wherein the aggregator (20) itself comprises a Web service (10).

6. A method of aggregating dynamic endpoints for efficiently delivering Web services (10) to a client (5), the method comprising steps of:
receiving a plurality of Web service requests from the client (5) at an aggregator (20) connected between the client (5) and a data network (6) to which the requested Web services (10) are also connected, each Web service request comprising a respective Web service endpoint for accessing the requested Web service (10);
establishing a communications session between the aggregator (20) and each Web service endpoint to access each requested Web service (10); aggregating the requested Web services (10) at the aggregator (20) by reformulating the Web service data to create an aggregation of Web services (10) for the client by dynamically resetting endpoints of Web services (10) at the aggregator (20) without relaying the dynamically reset endpoints to the client (5); and
delivering the aggregation of Web services (10) to the client (5).

7. The method as claimed in claim 6 wherein the step of aggregating the plurality of Web services (10) is performed within an application gateway (2) that is connected between a wireless network (4) and the data network (6) for mediating data traffic between the wireless network (4) and the data network (6).

8. The method as claimed in claim 6 or claim 7 wherein the step of receiving a plurality of Web service requests from the client (5) comprises the step of receiving Simple Object Access Protocol "SOAP" requests from the client (5), each SOAP request having a SOAP header containing a redirect endpoint for a requested Web service enabling the aggregator (20) to access the requested Web service (10).

9. The method as claimed in any one of claims 6 to 8 wherein the step of establishing a communications session between the aggregator (20) and each Web service endpoint comprises the step of sending a SOAP request and receiving a SOAP response to and from each of the requested Web service endpoints.

10. The method as claimed in any one of claims 6 to 9 wherein the step of aggregating Web service data from each of the plurality of Web services (10) at the aggregator (20) to create an aggregation of Web services (10) comprises the step of reconstituting the aggregation of Web services (10) as a single Web service accessible directly by the client (5).

11. A computer program product for aggregating dynamic endpoints for efficiently delivering Web services (10) to a client (5), the computer program product comprising a computer readable medium embodying code means executable by a processor of a computing device (8) to implement the method of any one of claims 6 to 10.

12. A communications network comprising a system according to any one of claims 1 to 5 and at least one wireless communication device (8) communicating with said system over a wireless connection.

## Patentansprüche

1. System zum Sammeln dynamischer Endpunkte für das effiziente Liefern von Web-Services an einen Client (5), das System umfassend:
ein Datennetzwerk (6), das kommunikationsfähig mit dem Client (5) verbunden ist, um dem Client (5) das Senden und Empfangen von Daten über das Datennetzwerk (6) zu ermöglichen;
eine Mehrzahl von Web-Services (10), die mit dem Datennetzwerk (6) verbunden sind, um dem Client (5) den Zugriff auf die Web-Services (10) über das Datennetzwerk (6) zu ermöglichen; und
einen Aggregator (20), der kommunikationsfähig zwischen den Client (5) und die Web-Services (10) geschaltet ist, wobei der Aggregator dazu eingerichtet ist, Web-Service-Anforderungen von dem Client (5) für angeforderte Web-Services (10) zu empfangen, wobei jede Web-Service-Anforderung einen jeweiligen Web-Service-Endpunkt zum Zugreifen auf den angeforderten Web-Service (10) umfasst, auf die
angeforderten Web-Services (10) an jedem Web-Service-Endpunkt zuzugreifen, Web-Service-Daten von den Web-Services (10) zu empfangen, die Web-Service-Daten zu sammeln, indem die Web-Service-Daten für den Client (5) umformuliert werden, und dann die gesammelten Web-Services (10) zu dem Client zu kommunizieren, wobei der Client (5) dazu eingerichtet ist, eine Kommunikationssitzung mit dem Aggregator (20) herzustellen, indem der Aggregator (20) als ein fester Endpunkt für den Client (5) festgelegt wird, und
wobei der Aggregator (20) dazu eingerichtet ist, die Endpunkte der angeforderten Web-Services (10) dynamisch zurückzusetzen, ohne die dynamisch zurückgesetzten Endpunkte zu dem Client (5) weiterzuleiten.

2. System gemäß Anspruch 1, wobei der Client (5) dazu eingerichtet ist, auf einem Drahtloskommunikationsgerät (8) ausgeführt zu werden, das von einem Drahtlosnetzwerk (4) gehostet wird, welches mit dem Datennetzwerk (6) über ein Anwendungs-Gateway (2) verbunden ist, das dazu eingerichtet ist, den Datenverkehr zwischen dem Drahtlosnetzwerk (4) und dem Datennetzwerk (6) zu vermitteln, wodurch der Aggregator (20) dazu eingerichtet ist, die dynamischen Endpunkte aller durch den Client (5) angeforderten Web-Services (10) zu sammeln und die Web-Service-Daten über eine Drahtlosverbindung effizient zu dem Client (5) zu kommunizieren.

3. System gemäß Anspruch 2, wobei die Kommunikationssitzung eine SOAP-Anforderung (Simple Object Access Protocol) an den Aggregator (20) umfasst, die einen SOAP-Header enthält, der eine Umleitungs-URL eines Web-Service (10) enthält, um den Aggregator (20) anzuweisen, unter dieser URL auf den angeforderten Web-Service (10) zuzugreifen.

4. System gemäß einem der vorherigen Ansprüche, wobei der Aggregator (20) koresident mit dem Anwendungs-Gateway (2) ist.

5. System gemäß einem der vorherigen Ansprüche, wobei der Aggregator (20) selbst einen Web-Service (10) umfasst.

6. Verfahren zum Sammeln dynamischer Endpunkte für das effiziente Liefern von Web-Services (10) an einen Client (5), das Verfahren umfassend:
das Empfangen einer Mehrzahl von Web-Service-Anforderungen von dem Client (5) an einem Aggregator (20), der zwischen den Client (5) und ein Datennetzwerk (6) geschaltet ist, mit dem die angeforderten Web-Services (10) ebenfalls verbunden sind, wobei jede Web-Service-Anforderung einen jeweiligen Web-Service-Endpunkt zum Zugreifen auf den angeforderten Web-Service (10) umfasst;
das Herstellen einer Kommunikationssitzung zwischen dem Aggregator (20) und jedem Web-Service-Endpunkt zum Zugreifen auf jeden angeforderten Web-Service (10);
das Sammeln der angeforderten Web-Services (10) in dem Aggregator (20) durch Umformulierung der Web-Service-Daten, um eine Aggregation von Web-Services (10) für den Client zu erstellen, indem die Endpunkte der Web-Services (10) in dem Aggregator (10) dynamisch zurückgesetzt werden, ohne die dynamisch zurückgesetzten Endpunkte zu dem Client (5) weiterzuleiten; und das Liefern der Aggregation von Web-Services (10) an den Client (5).

7. Verfahren gemäß Anspruch 6, wobei der Schritt des
Sammelns der Mehrzahl von Web-Services (10) in einem Anwendungs-Gateway (2) durchgeführt wird, das zwischen ein Drahtlosnetzwerk (4) und das Datennetzwerk (6) geschaltet ist, um den Datenverkehr zwischen dem Drahtlosnetzwerk (4) und dem Datennetzwerk (6) zu vermitteln.

8. Verfahren gemäß Anspruch 6 oder Anspruch 7, wobei der Schritt des Empfangens einer Mehrzahl von Web-Service-Anforderungen von dem Client (5) den Schritt des Empfangens von SOAP-Anforderungen (Simple Object Access Protocol) von dem Client (5) umfasst, wobei jede SOAP-Anforderung einen SOAP-Header enthält, der einen Umleitungsendpunkt für einen angeforderten Web-Service enthält, wodurch es dem Aggregator (20) ermöglicht wird, auf den angeforderten Web-Service (10) zuzugreifen.

9. Verfahren gemäß einem der Ansprüche 6 bis 8, wobei der Schritt des Herstellens einer Kommunikationssitzung zwischen dem Aggregator (20) und jedem Web-Service-Endpunkt den Schritt des Sendens einer SOAP-Anforderung und des Empfangens einer SOAP-Antwort an jeden und von jedem der angeforderten Web-Service-Endpunkte umfasst.

10. Verfahren gemäß einem der Ansprüche 6 bis 9, wobei der Schritt des Sammelns von Web-Service-Daten von jedem aus der Mehrzahl von Web-Services (10) in dem Aggregator (20) zum Erstellen einer Aggregation von Web-Services (10) den Schritt des Rekonstruierens der Aggregation von Web-Services (10) als einen einzelnen Web-Service umfasst, auf den der Client (5) direkt zugreifen kann.

11. Computerprogrammprodukt zum Sammeln dynamischer Endpunkte für das effiziente Liefern von Web-Services (10) an einen Client (5), wobei das Computerprogrammprodukt ein computerlesbares Medium mit darauf verkörperten Codemitteln umfasst, die von einem Prozessor eines Computergeräts (8) ausgeführt werden können, um das Verfahren gemäß einem der Ansprüche 6 bis 10 zu implementieren.

12. Kommunikationsnetzwerk, umfassend ein System gemäß einem der Ansprüche 1 bis 5 und mindestens ein Drahtloskommunikationsgerät (8), das über eine Drahtlosverbindung mit dem System kommuniziert.

## Revendications

1. Un système pour agréger des points d'extrémité dynamiques afin de délivrer efficacement des services Web à un client (5), le système comportant :
un réseau de données (6) connecté de façon à communiquer avec le client (5) pour permettre au client (5) d'envoyer et de recevoir des données par le biais du réseau de données (6) ;
une pluralité de services Web (10) connectés au réseau de données (6) pour permettre au client (5) d'accéder aux services Web (10) par le biais du réseau de données (6) ; et
un agrégateur (20) connecté de façon à communiquer entre le client (5) et les services Web (10), l'agrégateur étant agencé pour recevoir des demandes de service Web du client (5) pour des services Web demandés (10), chaque demande de service Web comportant un point d'extrémité de service Web respectif pour accéder au service Web demandé (10), accéder aux services Web demandés (10) à chaque point d'extrémité de service Web, recevoir des données de services Web des services Web (10), agréger les données de services Web en reformulant les données de services Web pour le client (5), et ensuite communiquer les services Web agrégés (10) au client, où le client (5) est agencé pour établir une session de communication avec l'agrégateur (20) en paramétrant l'agrégateur (20) comme un point d'extrémité fixe pour le client (5) et où l'agrégateur (20) est agencé pour réinitialiser de façon dynamique les points d'extrémité des services Web demandés (10) sans relayer les points d'extrémité réinitialisés de façon dynamique au client (5).

2. Le système tel que revendiqué dans la revendication 1 où le client (5) est agencé pour tourner sur un dispositif de communication sans fil (8) hébergé par un réseau sans fil (4) connecté au réseau de données (6) par l'intermédiaire d'une passerelle d'application (2) qui est agencée pour servir d'intermédiaire au trafic de données entre le réseau sans fil (4) et le réseau de données (6) grâce à quoi l'agrégateur (20) est agencé pour agréger les points d'extrémité dynamiques de tous les services Web (10) demandés par le client (5) et communiquer efficacement les données de services Web au client (5) sur une connexion sans fil.

3. Le système tel que revendiqué dans la revendication 2 où la session de communication comporte une demande « SOAP » (« *Simple Object Access Protocol* ») à l'agrégateur (20) contenant un en-tête SOAP comportant une URL de redirection d'un service Web (10) pour donner instruction à l'agrégateur (20) d'accéder au service Web demandé (10) à cette URL.

4. Le système tel que revendiqué dans n'importe laquelle des revendications précédentes où l'agrégateur (20) est corésident avec la passerelle d'application (2).

5. Le système tel que revendiqué dans n'importe laquelle des revendications précédentes où l'agrégateur (20) lui-même comporte un service Web (10).

6. Un système pour agréger des points d'extrémité dynamiques afin de délivrer efficacement des services Web (10) à un client (5), le procédé comportant les étapes visant à :
recevoir une pluralité de demandes de service Web du client (5) au niveau d'un agrégateur (20) connecté entre le client (5) et un réseau de données (6) auquel les services Web demandés (10) sont également connectés, chaque demande de service Web comportant un point d'extrémité de service Web respectif pour accéder au service Web demandé (10) ;
établir une session de communication entre l'agrégateur (20) et chaque point d'extrémité de service Web pour accéder à chaque service Web demandé (10) ;
agréger les services Web demandés (10) au niveau de l'agrégateur (20) en reformulant les données de service Web pour créer une agrégation de services Web (10) pour le client en réinitialisant de façon dynamique les points d'extrémité des services Web (10) au niveau de l'agrégateur (20) sans relayer les points d'extrémité réinitialisés de façon dynamique au client (5) ; et
délivrer l'agrégation de services Web (10) au client (5).

7. Le procédé tel que revendiqué dans la revendication 6 où l'étape visant à agréger la pluralité de services Web (10) est réalisée au sein d'une passerelle d'application (2) qui est connectée entre un réseau sans fil (4) et le réseau de données (6) pour servir d'intermédiaire au trafic de données entre le réseau sans fil (4) et le réseau de données (6).

8. Le procédé tel que revendiqué dans la revendication 6 ou la revendication 7 où l'étape visant à recevoir une pluralité de demandes de service Web du client (5) comporte l'étape visant à recevoir des demandes « SOAP » (« *Simple Object Access Protocol* ») du client (5), chaque demande SOAP ayant un en-tête SOAP contenant un point d'extrémité de redirection pour un service Web demandé permettant à l'agrégateur (20) d'accéder au service Web demandé (10).

9. Le procédé tel que revendiqué dans n'importe laquelle des revendications 6 à 8 où l'étape visant à établir une session de communication entre l'agrégateur (20) et chaque point d'extrémité de service Web comporte l'étape visant à envoyer une demande SOAP à et de recevoir une réponse SOAP de chacun des points d'extrémité de service Web demandé.

10. Le procédé tel que revendiqué dans n'importe laquelle des revendications 6 à 9 où l'étape visant à agréger les données de service Web de chaque service Web parmi la pluralité de services Web (10) au niveau de l'agrégateur (20) pour créer une agrégation de services Web (10) comporte l'étape visant à reconstituer l'agrégation de services Web (10) comme service Web unique accessible directement par le client (5).

11. Un produit de programme informatique pour agréger des points d'extrémité dynamiques afin de délivrer efficacement des services Web (10) à un client (5), le produit de programme informatique comportant un support lisible par ordinateur intégrant un moyen de code exécutable par un processeur d'un dispositif informatique (8) pour implémenter le procédé de n'importe laquelle des revendications 6 à 10.

12. Un réseau de communication comportant un système selon n'importe laquelle des revendications 1 à 5 et au moins un dispositif de communication sans fil (8) communiquant avec ledit système sur une connexion sans fil.
